# EUROPEAN PATENT SPECIFICATION

(11) **EP 3 862 541 B1**
(45) Date of publication and mention of the grant of the patent: **27.12.2023**
(21) Application number: 21153603.2
(22) Date of filing: 26.01.2021
(51) Int. Cl.: F01D 9/02, F01D 11/08, F01D 25/12, B22F 5/00, F01D 11/24, F01D 25/24

(54) **HOT GAS PATH TURBINE COMPONENTS INCLUDING AFT END EXHAUST CONDUITS AND AFT END FLANGES**
HEISSGASPFADTURBINENKOMPONENTEN MIT ABGASLEITUNGEN AM HINTEREN ENDE UND FLANSCHEN AM HINTEREN ENDE
COMPOSANTS DE TRAJET DE GAZ CHAUD D'UNE TURBINE COMPRENANT DES CONDUITS D'ÉCHAPPEMENT D'EXTRÉMITÉ ARRIÈRE ET DES BRIDES D'EXTRÉMITÉ ARRIÈRE

(30) Priority: 10.02.2020 US 202016786250
(43) Date of publication of application: 11.08.2021
(73) Proprietor: General Electric Technology GmbH, 5400 Baden (CH)
(72) Inventor: GREGG, Jason Ray, Greenville, SC 29615 (US); KESTER, Christopher William, Fishers, IN 46037 (US); COX, Christopher Paul, Greenville, SC 29615 (US); JOHNSON, David Martin, Greenville, SC 29615 (US); SEZER, Ibrahim, Greenville, SC 29615 (US)
(74) Representative: Novagraaf Group

(56) References cited:
- EP-A1- 3 004 553
- EP-A1- 3 388 628
- EP-B1- 3 004 553
- WO-A1-2011/115880
- US-A1- 2015 007 581

## Description

### BACKGROUND OF THE INVENTION

The disclosure relates generally to hot gas path components for turbine systems, and more particularly, to turbine shrouds and stator vanes that include a plurality of aft end exhaust conduits and aft end flanges.

Conventional turbomachines, such as gas turbine systems, are utilized to generate power for electric generators. In general, gas turbine systems generate power by passing a fluid (e.g., hot gas) through a turbine component of the gas turbine system. More specifically, inlet air may be drawn into a compressor and may be compressed. Once compressed, the inlet air is mixed with fuel to form a combustion product, which may be ignited by a combustor of the gas turbine system to form the operational fluid (e.g., hot gas) of the gas turbine system. The fluid may then flow through a fluid flow path for rotating a plurality of rotating blades and rotor or shaft of the turbine component for generating the power. The fluid may be directed through the turbine component via the plurality of rotating blades and a plurality of stationary nozzles or vanes positioned between the rotating blades. As the plurality of rotating blades rotate the rotor of the gas turbine system, a generator, coupled to the rotor, may generate power from the rotation of the rotor.

To improve operational efficiencies turbine components may include turbine shrouds and/or nozzle bands to further define the flow path of the operational fluid. Turbine shrouds, for example, may be positioned radially adjacent rotating blades of the turbine component and may direct the operational fluid within the turbine component and/or define the outer bounds of the fluid flow path for the operational fluid. During operation, turbine shrouds may be exposed to high temperature operational fluids flowing through the turbine component. Over time and/or during exposure, the turbine shrouds may undergo undesirable thermal expansion. The thermal expansion of turbine shrouds may result in damage to the shrouds and/or may not allow the shrouds to maintain a seal within the turbine component for defining the fluid flow path for the operational fluid. When the turbine shrouds become damaged or no longer form a satisfactory seal within the turbine component, the operational fluid may leak from the flow path, which in turn reduces the operational efficiency of the turbine component and the entire turbine system.

To minimize thermal expansion, turbine shrouds are typically cooled. One conventional process for cooling turbine shrouds includes impingement cooling. Impingement cooling utilizes holes or apertures formed through the turbine shroud to provide cooling air to various portions of the turbine shroud during operation. However, these conventional processes present new issues that reduce operational efficiencies for the system. For example, while the turbine shrouds are cooled during operation, the fluid (e.g., air) used to cool the shroud absorbs the heat. When discharged from the shroud, this heated cooling fluid may flow directly adjacent, be exposed to, and/or contact portions of the turbine casing that may support the shroud and other various components of the turbine. The casing and/or the components that support the shroud and/or other various components of the turbine may be negatively impacted or affected by exposure to the heightened temperature cooling fluid. That is, exposure to the cooling fluid with the heightened temperature may undesirably and prematurely degrade the material forming the casing, which in turn reduces the operational life.

EP 3 004 553 A1 discloses a triple hook ring segment including forward, midsection, and aft mounting hooks for engagement with respective hangers formed on a ring segment carrier for supporting a ring segment panel, and defining a forward high pressure chamber and an aft low pressure chamber on opposing sides of the midsection mounting hook. US 2015/007581 A1 discloses a shroud block segment for a gas turbine that includes a main body having a leading portion, a trailing portion, a first side portion and an opposing second side portion that extend axially between the leading portion and the trailing portion. EP3388628A1 discloses a cooling system for a three hook vane ring segment.

### BRIEF DESCRIPTION OF THE INVENTION

The invention is defined by the appended claims. Claim 1 defines a turbine shroud and claim 10 defines a stator vane.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic diagram of a gas turbine system;
FIG. 2 shows a side view of a portion of a turbine of the gas turbine system of FIG. 1 including a turbine blade, a stator vane, a rotor, a casing, and a turbine shroud, according to the invention;
FIG. 3 shows an isometric view of the turbine shroud of FIG. 2, according to the invention ;
FIG. 4 shows a top view of the turbine shroud of FIG. 3, according to the invention;
FIG. 5 shows a side view of the turbine shroud of FIG. 3, according to the invention;
FIG. 6 shows a cross-sectional side view of the turbine shroud taken along line 6-6 in FIG. 4, according to the invention;
FIGs. 7-9 show cross-sectional side views of a turbine shroud, according to the present invention;
FIG. 10 shows an enlarged side view of the portion of the turbine of the gas turbine system of FIG. 2 including the turbine shroud, according to the invention;
FIG. 11 shows a top view of a turbine shroud, according to the invention;
FIG. 12 shows a cross-sectional side view of the turbine shroud taken along line 12-12 in FIG. 11, according to the invention;
FIG. 13 shows a top view of a turbine shroud, according to the invention;
FIG. 14 shows a side view of a stator vane, according to the invention;
FIG. 15 shows a cross-sectional side view of the stator vane taken along line 15-15 in FIG. 14, according to the invention; and
FIGs. 16 and 17 show cross-sectional side views of the stator vane of FIG. 14, according to the present invention.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As an initial matter, in order to clearly describe the current disclosure it will become necessary to select certain terminology when referring to and describing relevant machine components within the scope of this disclosure. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

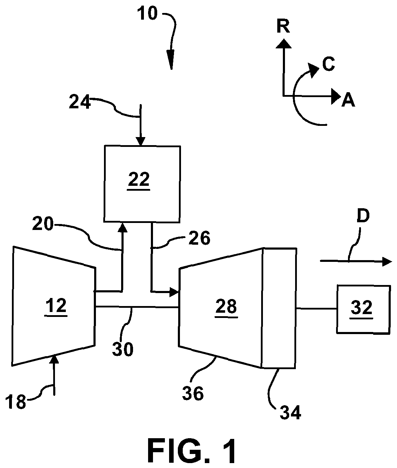

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbine engine or, for example, the flow of air through the combustor or coolant through one of the turbine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the engine, and "aft" referring to the rearward or turbine end of the engine. Additionally, the terms "leading" and "trailing" may be used and/or understood as being similar in description as the terms "forward" and "aft," respectively. It is often required to describe parts that are at differing radial, axial and/or circumferential positions. The "A" axis represents an axial orientation. As used herein, the terms "axial" and/or "axially" refer to the relative position/direction of objects along axis A, which is substantially parallel with the axis of rotation of the turbine system (in particular, the rotor section). As further used herein, the terms "radial" and/or "radially" refer to the relative position/direction of objects along a direction "R" *(see,* FIG. 1), which is substantially perpendicular with axis A and intersects axis A at only one location. Finally, the term "circumferential" refers to movement or position around axis A (e.g., direction "C").

As indicated above, the disclosure provides hot gas path components for turbine systems, and more particularly, to turbine shrouds and stator vanes that include a plurality of aft end exhaust conduits and aft end flanges.

These and other embodiments are discussed below with reference to FIGs. 1-17. However, those skilled in the art will readily appreciate that the detailed description given herein with respect to these Figures is for explanatory purposes only and should not be construed as limiting.

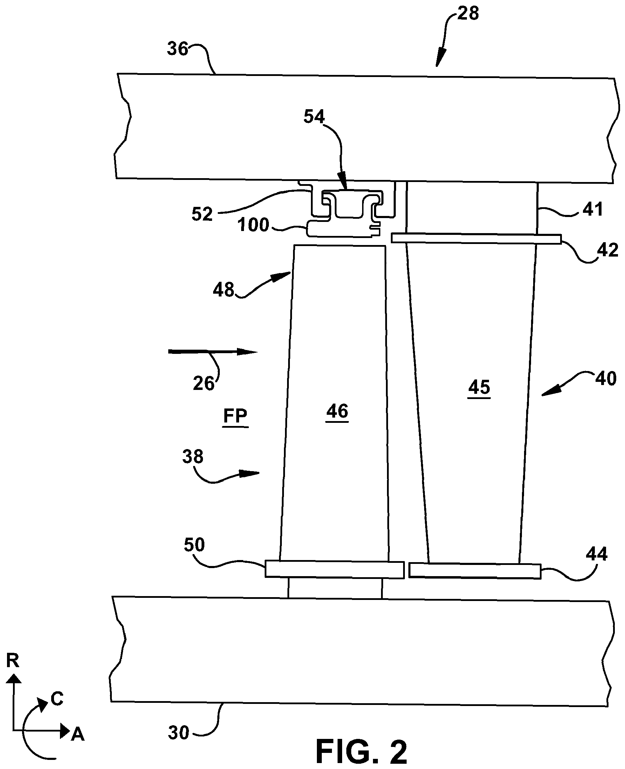

FIG. 1 shows a schematic view of an illustrative gas turbine system 10. Gas turbine system 10 may include a compressor 12. Compressor 12 compresses an incoming flow of air 18. Compressor 12 delivers a flow of compressed air 20 to a combustor 22. Combustor 22 mixes the flow of compressed air 20 with a pressurized flow of fuel 24 and ignites the mixture to create a flow of combustion gases 26. Although only a single combustor 22 is shown, gas turbine system 10 may include any number of combustors 22. The flow of combustion gases 26 is in turn delivered to a turbine 28, which typically includes a plurality of turbine blades including airfoils *(see,* FIG. 2) and stator vanes (*see,* FIG. 2). The flow of combustion gases 26 drives turbine 28, and more specifically the plurality of turbine blades of turbine 28, to produce mechanical work. The mechanical work produced in turbine 28 drives compressor 12 via a rotor 30 extending through turbine 28, and may be used to drive an external load 32, such as an electrical generator and/or the like.

Gas turbine system 10 may also include an exhaust frame 34. As shown in FIG. 1, exhaust frame 34 may be positioned adjacent to turbine 28 of gas turbine system 10. More specifically, exhaust frame 34 may be positioned adjacent to turbine 28 and may be positioned substantially downstream of turbine 28 and/or the flow of combustion gases 26 flowing from combustor 22 to turbine 28. As discussed herein, a portion (e.g., outer casing) of exhaust frame 34 may be coupled directly to an enclosure, shell, or casing 36 of turbine 28.

Subsequent to combustion gases 26 flowing through and driving turbine 28, combustion gases 26 may be exhausted, flow-through and/or discharged through exhaust frame 34 in a flow direction (D). In the non-limiting example shown in FIG. 1, combustion gases 26 may flow through exhaust frame 34 in the flow direction (D) and may be discharged from gas turbine system 10 (e.g., to the atmosphere). In another non-limiting example where gas turbine system 10 is part of a combined cycle power plant (e.g., including gas turbine system and a steam turbine system), combustion gases 26 may discharge from exhaust frame 34, and may flow in the flow direction (D) into a heat recovery steam generator of the combined cycle power plant.

Turning to FIG. 2, a portion of turbine 28 is shown. Specifically, FIG. 2 shows a side view of a portion of turbine 28 including a stage of turbine blades 38 (one shown), and a stage of stator vanes 40 (one shown) positioned within casing 36 of turbine 28. As discussed herein, each stage (e.g., first stage, second stage (not shown), third stage (not shown)) of turbine blades 38 may include a plurality of turbine blades 38 that may be coupled to and positioned circumferentially around or about rotor 30 and may be driven by combustion gases 26 to rotate rotor 30. As show, the plurality of turbine blades 38 may also extend radially from rotor 30. Additionally, each stage (e.g., first stage, second stage (not shown), third stage (not shown)) of stator vanes 40 may include a plurality of stator vanes that may be coupled to and/or positioned circumferentially about casing 36 of turbine 28 via a retaining component 41 extending from casing 36. In the non-limiting example shown in FIG. 2, stator vanes 40 may include a plurality of hot gas path (HGP) components including and/or be formed as an outer platform 42 coupled directly to retaining component 41, and an inner platform 44 positioned opposite the outer platform 42. Stator vanes 40 of turbine 28 may also include an airfoil 45 positioned between outer platform 42 and inner platform 44. Outer platform 42 and inner platform 44 of stator vanes 40 may define a flow path (FP) for the combustion gases 26 flowing over stator vanes 40. As discussed herein, stator vanes 40, and more specifically outer platform 42, may be positioned directly adjacent and downstream of a turbine shroud of turbine 28.

Each turbine blade 38 of turbine 28 may include an airfoil 46 extending radially from rotor 30 and positioned within the flow path (FP) of combustion gases 26 flowing through turbine 28. Each airfoil 46 may include tip portion 48 positioned radially opposite rotor 30. Turbine blade 38 may also include a platform 50 positioned opposite tip portion 48 of airfoil 46. In a non-limiting example, platform 50 may partially define a flow path for combustion gases 26 for turbine blades 38. Turbine blades 38 and stator vanes 40 may also be positioned axially adjacent to one another within casing 36. In the non-limiting example shown in FIG. 2, stator vanes 40 may be positioned axially adjacent and downstream of turbine blades 38. Not all turbine blades 38, stator vanes 40 and/or all of rotor 30 of turbine 28 are shown for clarity. Additionally, although only a portion of a single stage of turbine blades 38 and stator vanes 40 of turbine 28 are shown in FIG. 2, turbine 28 may include a plurality of stages of turbine blades and stator vanes, positioned axially throughout casing 36 of turbine 28.

Turbine 28 of gas turbine system 10 (*see,* FIG. 1) may also include a plurality of turbine shrouds 100 included within turbine 28. Turbine 28 may include a stage of turbine shrouds 100 (one shown). Turbine shrouds 100 may correspond with the stage of turbine blades 38 and/or the stage of stator vanes 40. That is, and as discussed herein, the stage of turbine shrouds 100 may be positioned within turbine 28 adjacent the stage of turbine blades 38 and/or the stage of stator vanes 40 to interact with and provide a seal in and/or define the flow path (FP) of combustion gases 26 flowing through turbine 28. In the non-limiting example shown in FIG. 2, the stage of turbine shrouds 100 may be positioned radially adjacent and/or may substantially surround or encircle the stage of turbine blades 38. Turbine shrouds 100 may be positioned radially adjacent tip portion 48 of airfoil 46 for turbine blade 38. Additionally in the non-limiting example, turbine shrouds 100 may also be positioned axially adjacent and/or upstream of stator vanes 40 of turbine 28. Turbine shrouds 100 may also be positioned between two adjacent stages of stator vanes that may surround and/or be positioned on either axially side of a single stage of turbine blades.

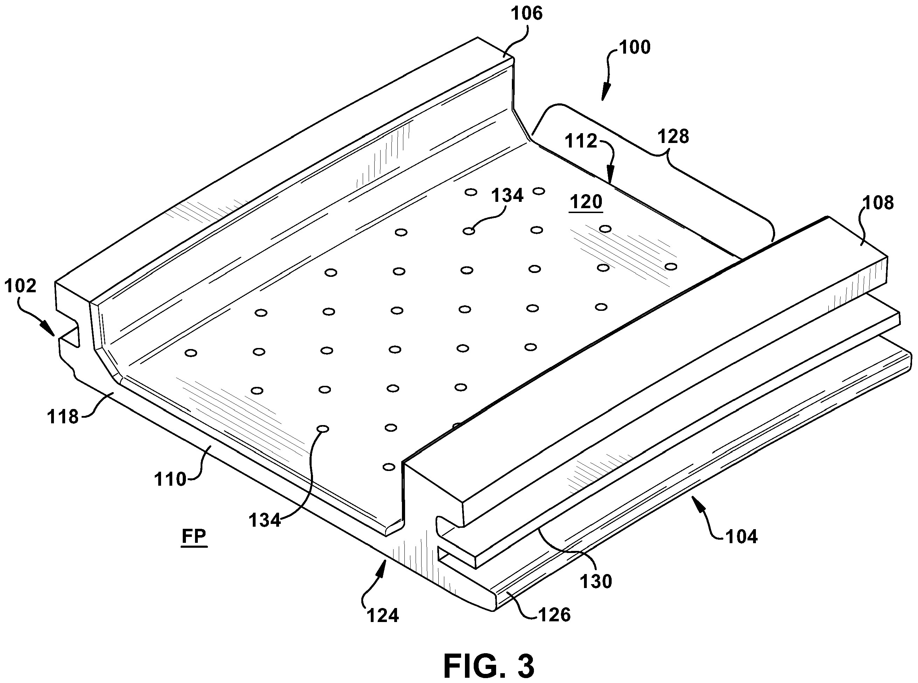

The stage of turbine shrouds may include a plurality of turbine shrouds 100 that may be coupled directly to and/or positioned circumferentially about casing 36 of turbine 28. In the non-limiting example shown in FIG. 2, turbine shrouds 100 may be coupled directly to casing 36 via coupling component 52 extending radially inward (e.g., toward rotor 30) from casing 36 of turbine 28. As discussed herein, coupling component 52 may include an opening 54 that may be configured to be coupled to and/or receive fasteners or hooks (*see,* FIG. 3) of turbine shrouds 100 to couple, position, and/or secure turbine shrouds 100 to casing 36 of turbine 28. In a non-limiting example, coupling component 52 may be coupled and/or fixed to casing 36 of turbine 28. More specifically, coupling component 52 may be circumferentially disposed around casing 36, and may be positioned radially adjacent turbine blades 38. In another non-limiting example, coupling component 52 may be formed integral with and/or may be a part of casing 36 for coupling, positioning, and/or securing turbine shrouds 100 directly to casing 36. Similar to turbine blades 38 and/or stator vanes 40, although only a portion of the stage of turbine shrouds 100 of turbine 28 is shown in FIG. 2, turbine 28 may include a plurality of stages of turbine shrouds 100, positioned axially throughout casing 36 of turbine 28 and coupled to casing 26 using coupling component 52.

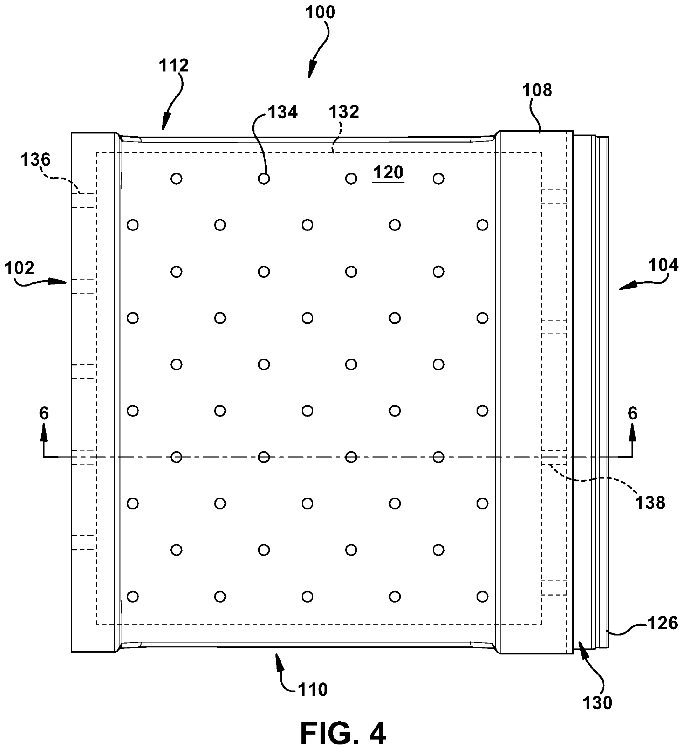

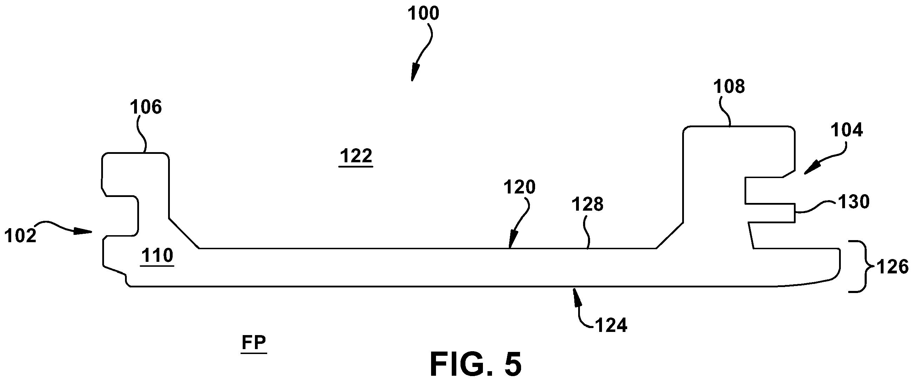

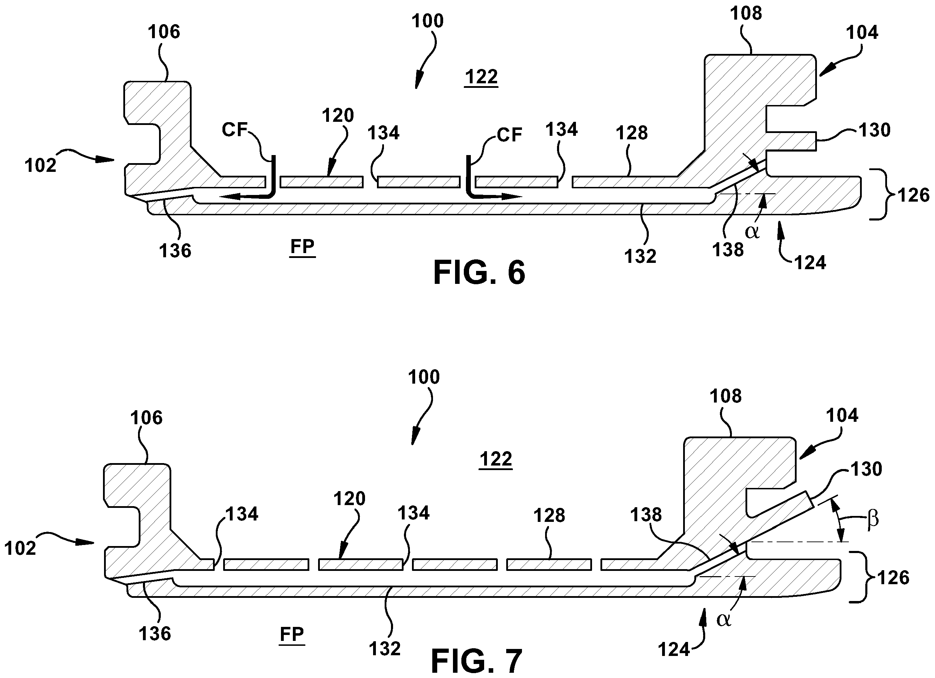

Turning to FIGs. 3-6 show various views of turbine shroud 100 of turbine 28 for gas turbine system 10 of FIG. 1. Specifically, FIG. 3 shows an isometric view of turbine shroud 100, FIG. 4 shows a top view of turbine shroud 100, FIG. 5 shows a side view of turbine shroud 100, and FIG. 6 shows a cross-sectional side view of turbine shroud 100.

In the non-limiting example shown, turbine shroud 100 may include a unitary body. That is, and as shown in FIGs. 3-6, turbine shroud 100 may include and/or be formed as unitary body such that turbine shroud 100 is a single, continuous, and/or non-disjointed component or part. In the non-limiting example shown in FIGs. 3-6, because turbine shroud 100 is formed from unitary body, turbine shroud 100 may not require the building, joining, coupling, and/or assembling of various parts to completely form turbine shroud 100, and/or may not require building, joining, coupling, and/or assembling of various parts before turbine shroud 100 can be installed and/or implemented within turbine system 10 (*see,* FIG. 2). Rather, once single, continuous, and/or non-disjointed unitary body for turbine shroud 100 is built, as discussed herein, turbine shroud 100 may be immediately installed within turbine system 10.

The unitary body of turbine shroud 100, and the various components and/or features of turbine shroud 100, may be formed using any suitable additive manufacturing process(es) and/or method. For example, turbine shroud 100 including a unitary body may be formed by direct metal laser melting (DMI,M) (also referred to as selective laser melting (SLM)), direct metal laser sintering (DMI,S), electronic beam melting (EBM), stereolithography (SLA), binder jetting, or any other suitable additive manufacturing process(es). Additionally, the unitary body of turbine shroud 100 may be formed from any material that may be utilized by additive manufacturing process(es) to form turbine shroud 100, and/or capable of withstanding the operational characteristics (e.g., exposure temperature, exposure pressure, and the like) experienced by turbine shroud 100 within gas turbine system 10 during operation.

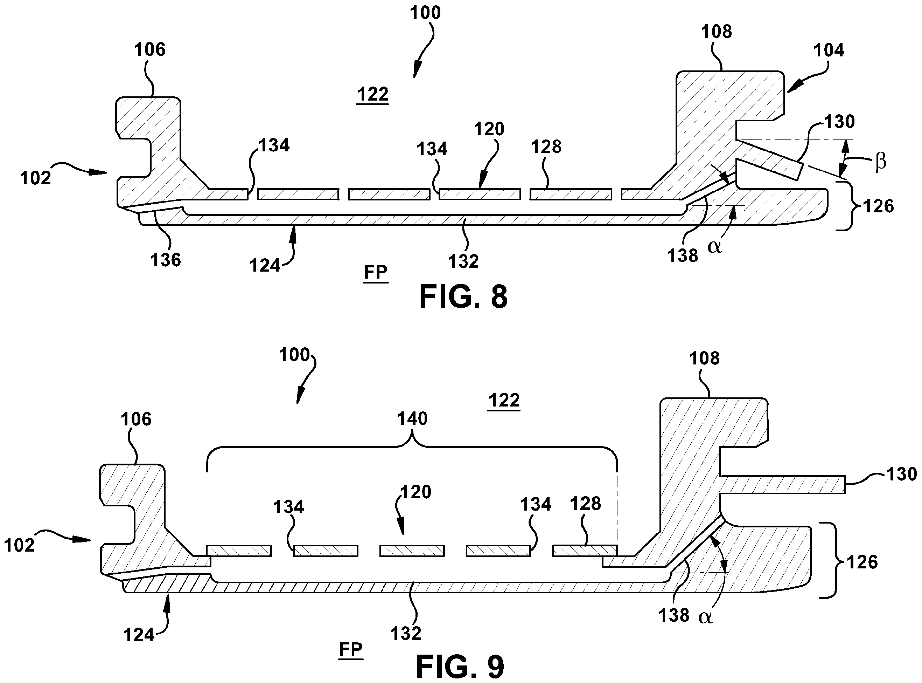

In another non-limiting example (*see,* FIG. 9) turbine shroud 100 may be formed as a plurality of distinct pieces and/or sections that may be built separately and subsequently assembled, coupled, joined, and/or affixed to one another prior to installing turbine shroud 100 within gas turbine system 10. Turbine shroud 100 may be assembled using any suitable technique or process known to join/form components including, but not limited to, welding, brazing, melting, coupling, and so on. Additionally, turbine shroud 100 formed from distinct sections and/or pieces may be formed from any material that may undergo the processes for joining/forming turbine shroud 100 from distinct pieces, and is capable of withstanding the operational characteristics (e.g., exposure temperature, exposure pressure, and the like) experienced by turbine shroud 100 within gas turbine system 10 during operation.

Turbine shroud 100 may also include various ends, sides, and/or surfaces. For example, and as shown in FIGs. 3 and 4, turbine shroud 100 includes a forward end 102 and an aft end 104 positioned opposite forward end 102. Forward end 102 may be positioned upstream of aft end 104, such that combustion gases 26 flowing through the flow path (FP) defined within turbine 28 may flow adjacent forward end 102 before flowing by adjacent aft end 104 of turbine shroud 100. As shown in FIGs. 3 and 4, forward end 102 includes first hook 106 configured to be coupled to and/or engage coupling component 52 of casing 36 for turbine 28 to couple, position, and/or secure turbine shrouds 100 within casing 36 (*see,* FIG. 2). Additionally, aft end 104 includes second hook 108 positioned and/or formed on turbine shroud 100 opposite first hook 106. Similar to first hook 106, second hook 108 may be configured to be coupled to and/or engage coupling component 52 of casing 36 for turbine 28 to couple, position, and/or secure turbine shrouds 100 within casing 36 (*see,* FIG. 2).

Additionally, turbine shroud 100 may also include a first slash face or side 110 (hereafter, "first side 110"), and a second slash face or side 112 (hereafter, "second side 112") positioned opposite first side 110. As shown in FIGs. 3 and 4, first side 110 and second side 112, each of which may be formed or positioned proximate to forward end 102 and aft end 104, as well as extend and/or be positioned between forward end 102 and aft end 104.

As shown in FIGs. 3-5 turbine shroud 100 may also include an outer surface 120. Outer surface 120 may face a cooling chamber 122 (*see,* FIG. 5) formed between turbine shroud 100 and turbine casing 36 (*see,* FIG. 2). More specifically, outer surface 120 may be positioned, formed, face, and/or directly exposed in cooling chamber 122 formed between turbine shroud 100 and turbine casing 36 of turbine 28. In a non-limiting example, cooling chamber 122 may be at least partially defined by opening 54 of coupling component 52 for casing 36. As discussed herein, cooling chamber 122 formed between turbine shroud 100 and turbine casing 36 may receive and/or provide cooling fluid to turbine shroud 100 during operation of turbine 28. In addition to facing cooling chamber 122, outer surface 120 of turbine shroud 100 may also be formed and/or positioned between forward end 102 and aft end 104, as well as first side 110 and second side 112, respectively.

Turbine shroud 100 may also include inner surface 124 formed opposite outer surface 120. That is, and as shown in the non-limiting example in FIGs. 3 and 5, inner surface 124 of turbine shroud 100 may be formed radially opposite outer surface 120. Briefly returning to FIG. 2, and with continued reference to FIGs. 3 and 5, inner surface 124 may face the hot gas flow path (FP) of combustion gases 26 flowing through turbine 28 (*see,* FIG. 2). More specifically, inner surface 124 may be positioned, formed, face, and/or directly exposed to the hot gas flow path (FP) of combustion gases 26 flowing through turbine casing 36 of turbine 28 for gas turbine system 10. Additionally, inner surface 124 of turbine shroud 100 may be positioned radially adjacent tip portion 48 of airfoil 42 (*see,* FIG. 2). Inner surface 124 may be formed and/or extend axially between forward end 102 and aft end 104 of turbine shroud 100. Additionally, inner surface 124 may be formed and/or extend circumferentially between opposing sides 110, 112 of turbine shroud 100. Inner surface 124 may also be formed radially opposite first hook 106 and second hook 108, respectively.

Turning to FIG. 6, with continued reference to FIGs. 3-5, additional features of turbine shroud 100 are now discussed. Turbine shroud 100 includes a base portion 126. As shown in FIG. 6, base portion 126 may be formed as an integral portion of turbine shroud 100. Additionally, base portion 126 includes inner surface 124, and/or inner surface 124 may be formed on base portion 126 of turbine shroud 100. Base portion 126 of turbine shroud 100 is formed, positioned, and/or extend between forward end 102 and aft end 104, and first side 110 and second side 112, respectively. Base portion 126 may also be formed integral with first side 110 and second side 112 of turbine shroud 100. In the non-limiting example, base portion 126 may also be positioned radially opposite and/or radially inward from first hook 106 and second hook 108 of turbine shroud 100, coupled to turbine casing 36 (*see,* FIG. 2). As discussed herein, base portion 126 of turbine shroud 100 may at least partially form and/or define at least one cooling passage within turbine shroud 100.

Turbine shroud 100 may include an impingement portion 128. Similar to base portion 126, as shown in FIG. 6, impingement portion 128 may be formed as an integral portion of turbine shroud 100. Impingement portion 128 may include outer surface 120, and/or outer surface 120 may be formed on impingement portion 128 of turbine shroud 100. Impingement portion 128 of turbine shroud 100 may be formed, positioned, and/or extend between forward end 102 and aft end 104, as well as first side 110 and second side 112, respectively. Additionally, and also similar to base portion 126, impingement portion 128 may be formed integral with first side 110 and second side 112 of turbine shroud 100. As shown in FIG. 6, impingement portion 128 may be positioned radially adjacent base portion 126 and/or may positioned radially between base portion 126 and first hook 106 and second hook 108, respectively. Impingement portion 128 of turbine shroud 100, along with base portion 126, may at least partially form and/or define at least one cooling passage within turbine shroud 100, as discussed herein.

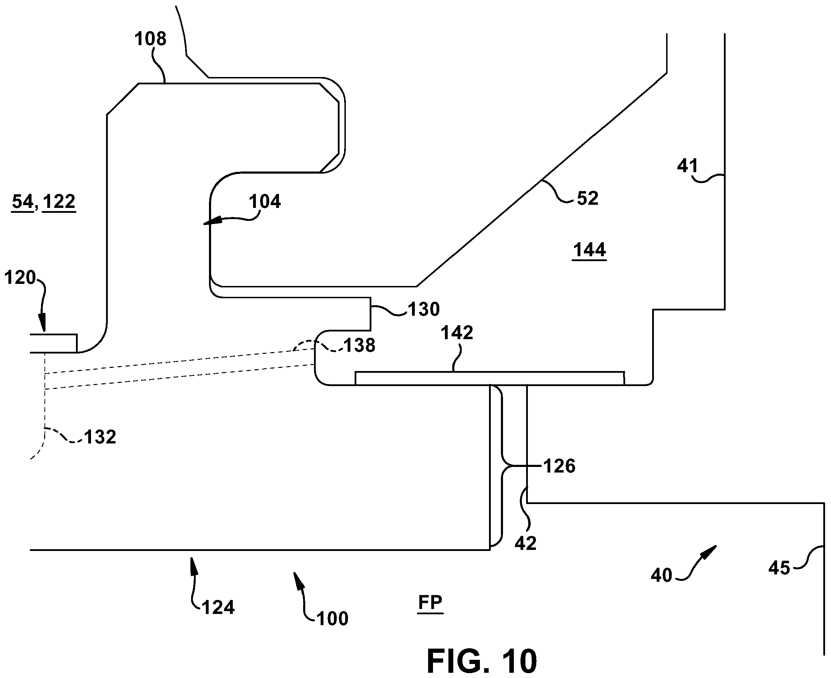

As shown in FIG. 6, turbine shroud 100 also includes a flange 130. Flange 130 extends from aft end 104 of turbine shroud 100. More specifically, flange 130 may extend (substantially) axially from aft end 104, and is positioned radially between base portion 126 and second hook 108 of turbine shroud 100. Additionally, flange 130 may extend from aft end 104, (circumferentially) between first side 110 and second side 112. In the non-limiting example shown in FIG. 6, flange 130 may be substantially planar, axially oriented, and/or substantially parallel with axis (A) and/or inner surface 124 of base portion 126. In other non-limiting examples (*see,* FIGs. 7 and 8), flange 130 may be angled and/or may angularly extend from aft end 104. As shown, flange 130 may be formed integral with aft end 104 of turbine shroud 100. In another non-limiting example (not shown), flange 130 may be formed as a distinct feature and/or component that may subsequently installed and/or affixed to aft end 104 of turbine shroud 100, prior to turbine shroud 100 be implemented within gas turbine system 10 (*see.* FIGs. 1 and 2). Additionally as shown in the non-limiting example of FIG. 6, base portion 126 of turbine shroud 100 may extend axially beyond and/or may extend axially further than flange 130. In other non-limiting examples, flange 130 may extend axially beyond base portion 126 (*see,* FIG. 9), or may extend axial from aft end 104 to be radially aligned with base portion 126 (not shown). As discussed herein, flange 130 may direct post-cooling fluid from turbine shroud 100 away from casing 36 and/or coupling component 52 (*see,* FIGs. 2 and 10) and/or may block the post-cooling fluid from turbine shroud 100 from contacting casing 36 and/or coupling component 52. Additionally, and as discussed herein, flange 130 may also absorb heat transferred to the post-cooling fluid that was previously used to cool turbine shroud 100.

Turbine shroud 100 also includes at least one cooling passage formed therein for cooling turbine shroud 100 during operation of turbine 28 of gas turbine system 10. As shown in FIGs. 4 and 6, turbine shroud 100 may include a cooling passage 132 formed, positioned, and/or extending within turbine shroud 100. More specifically, and briefly returning to FIG. 4, cooling passage 132 (shown in phantom in FIG. 4) of turbine shroud 100 may extend within turbine shroud 100 between and/or adjacent forward end 102, aft end 104, first side 110, and second side 112, respectively. Additionally, and as shown in FIG. 6, cooling passage 132 may extend within turbine shroud 100 (radially) between and/or may be at least partially defined by base portion 126 and impingement portion 128. Cooling passage 132 is positioned and/or formed substantially within base portion 126, adjacent inner surface 124. As discussed herein, cooling passage 132 may receive cooling fluid from cooling chamber 122 to cool turbine shroud 100. The size (e.g., radial-opening height) of cooling passage 132 may be dependent on a variety of factors including, but not limited to, the size of turbine shroud 100, the thickness of base portion 126 and/or impingement portion 128, the cooling demand for turbine shroud 100, and/or the geometry or shape of forward end 102 and/or aft end 104 of turbine shroud 100.

In order to provide cooling passage 132 with cooling fluid, turbine shroud 100 may also include a plurality of impingement openings 134 formed therethrough. That is, and as shown in FIGs. 4 and 6, turbine shroud 100 may include a plurality of impingement openings 134 formed through outer surface 120, and more specifically impingement portion 128, of turbine shroud 100. The plurality of impingement openings 134 formed through outer surface 120 and/or impingement portion 128 may fluidly couple cooling passage 132 to cooling chamber 122. As discussed herein, during operation of gas turbine system 10 (*see,* FIG. 1) cooling fluid flowing through cooling chamber 122 may pass or flow through the plurality of impingement openings 134 to cooling passage 132 to substantially cool turbine shroud 100.

It is understood that the size and/or number of impingement openings 134 formed through outer surface 120 and/or impingement portion 128, as shown in FIGs. 4 and 6, is merely illustrative. As such, turbine shroud 100 may include larger or smaller impingement openings 134, and/or may include more or less impingement openings 134 formed therein. Additionally, although the plurality of impingement openings 134 are shown to be substantially uniform in size and/or shape, it is understood that each of the plurality of impingement openings 134 formed on turbine shroud 100 may include distinct sizes and/or shapes. The size, shapes, and/or number of impingement openings 134 formed in turbine shroud 100 may be dependent, at least in part on the operational characteristics (e.g., exposure temperature, exposure pressure, position within turbine casing 36, and the like) of gas turbine system 10 during operation. Additionally, or alternatively, the size, shapes, and/or number of impingement openings 134 formed in turbine shroud 100 may be dependent, at least in part on the characteristics (e.g., base portion 126 thickness, impingement portion 128 thickness, height of cooling passage 132, volume of cooling passage 132, and so on) of turbine shroud 100/cooling passage 132.

Also shown in FIGs. 4 and 6, turbine shroud 100 may include a plurality of forward end exhaust conduits 136 (shown in phantom in FIG. 4). The plurality of forward end exhaust conduits 136 may be in fluid communication with cooling passage 132, and in turn cooling chamber 122. More specifically, the plurality of forward end exhaust conduits 136 may each be in fluid communication with and may extend axially from cooling passage 132 of turbine shroud 100. In the non-limiting example shown in FIG. 6, the plurality of forward end exhaust conduits 136 may extend through turbine shroud 100, from cooling passage 132 to forward end 102 of turbine shroud 100. In addition to being in fluid communication with cooling passage 132, the plurality of forward end exhaust conduits 136 may be in fluid communication with an area within turbine 28 *(see,* FIG. 2) that is positioned upstream and axially aligned with forward end 102 of turbine shroud 100. During operation, and as discussed herein, the plurality of forward end exhaust conduits 136 may discharge cooling fluid (e.g., post-cooling fluid) from cooling passage 132, adjacent and upstream of forward end 102 of turbine shroud 100.

It is understood that turbine shroud 100 may include any number of forward end exhaust conduits 136 formed therein, and in fluid communication with cooling passage 132. Additionally, although shown as being substantially round/circular and linear, it is understood that forward end exhaust conduit(s) 136 may be non-round and/or non-linear openings, channels and/or manifolds. Where forward end exhaust conduit(s) 136 are formed to be non-round and/or non-linear, the direction of flow of the cooling fluid may vary to improve the cooling of forward end 102 of turbine shroud 100. Furthermore, forward end exhaust conduit(s) 136 may also have varying sizes between each forward end exhaust conduit 136 dependent on the cooling needs of turbine shroud 100 during operation.

Also shown in FIG. 6, turbine shroud 100 includes at least one aft end exhaust conduit 138. The at least one aft end exhaust conduit 138 is in fluid communication with cooling passage 132, and in turn may be in fluid communication with cooling chamber 122. More specifically, the at least one aft end exhaust conduit 138 is in fluid communication with and may extend from cooling passage 132 of turbine shroud 100. Additionally, and as a result of cooling passage 132 being in direct fluid communication with cooling chamber 122, each of the at least one aft end exhaust conduits 138 may also be in fluid communication with cooling chamber 122. As shown in FIG. 6, the at least one aft end exhaust conduit 138 extends through turbine shroud 100, from cooling passage 132 to and through aft end 104 of turbine shroud 100. Additionally, the at least one aft end exhaust conduit 138 extends and/or may be positioned radial between base portion 126 and flange 130 of turbine shroud 100. According to the present invention, the at least one aft end exhaust conduit 138 extends through turbine shroud 100 at an angle (α). That is, and as shown in FIG. 6, the at least one aft end exhaust conduit 138 is angled radially outward from cooling passage 132 toward flange 130, and/or may extend through turbine shroud 100 at a radial angle (α). The plurality of aft end exhaust conduits 138 may also be in fluid communication with an area of turbine 28 (*see,* FIG. 2) that may be positioned downstream of and axially adjacent aft end 104 of turbine shroud 100. As discussed herein, the plurality of aft end exhaust conduits 138 may discharge cooling fluid (e.g., post-cooling fluid) from cooling passage 132, adjacent and downstream of aft end 104 of turbine shroud 100.

Similar to forward end exhaust conduits 136, it is understood that turbine shroud 100 may include any number of aft end exhaust conduits 138 formed therein, and in fluid communication with cooling passage 132, and in turn in fluid communication with cooling chamber 122. Additionally, although shown as being substantially round/circular and linear, it is understood that aft end exhaust conduits 138 may be non-round and/or non-linear openings, channels and/or manifolds. Where aft end exhaust conduit(s) 138 are formed to be non-round and/or non-linear, the direction of flow of the cooling fluid may vary to improve the cooling of aft end 104 of turbine shroud 100. Furthermore, aft end exhaust conduit(s) 138 may also have varying sizes between each aft end exhaust conduits 138 dependent on the cooling needs of turbine shroud 100 during operation.

During operation of gas turbine system 10 (*see,* FIG. 1), cooling fluid (CF) may flow through and cool turbine shroud 100. More specifically, as turbine shroud 100 is exposed to combustion gases 26 flowing through the hot gas flow path of turbine 28 (*see,* FIG. 2) during operation of gas turbine system 10 and increases in temperature, cooling fluid (CF) may be provided to and/or may flow through cooling passage 132 formed between base portion 126 and impingement portion 128 to cool turbine shroud 100. With respect to FIG. 6, the various arrows may represent and/or may illustrates the flow path of the cooling fluid (CF) as it flows through turbine shroud 100. In a non-limiting example, cooling fluid (CF) may first flow from cooling chamber 122 to cooling passage 132 via the plurality of impingement openings 134 formed through outer surface 120 and/or impingement portion 128 of turbine shroud 100. The cooling fluid (CF) flowing into/through cooling passage 132 may cool and/or receive heat from outer surface 120/impingement portion 128 and/or inner surface 124/base portion 126. Once inside cooling passage 132, the cooling fluid (CF) may be dispersed and/or may flow axially toward one of forward end 102 or aft end 104 of turbine shroud 100. Additionally, the cooling fluid (CF) may be dispersed and/or may flow circumferentially toward one of first side 110 or second side 112 of turbine shroud 100.

Once the cooling fluid (CF) within cooling passage 132 has flowed to the respect end 102,104/side 110, 112 of turbine shroud 100, the cooling fluid (CF) may flow to through respective exhaust conduits 136, 138. For example, a portion of the cooling fluid (CF) that flows axially through cooling passage 132 toward forward end 102 may be dispensed and/or exhausted from turbine shroud 100 via the plurality of forward end exhaust conduits 136 in fluid communication with cooling passage 132 and formed or extending through forward end 102 of turbine shroud 100.

Furthermore, the portion of the cooling fluid (CF) that flows axially through cooling passage 132 toward aft end 104 may be dispensed and/or exhausted from turbine shroud 100 via the plurality of aft end exhaust conduits 138 in fluid communication with cooling passage 132 and formed or extending through aft end 104 of turbine shroud 100. Once exhausted from aft end exhaust conduits 138, the cooling fluid (e.g., post-cooling fluid) may flow toward, contact, and/or may be redirected by flange 130 of turbine shroud 100. That is, as a result of the plurality of aft end exhaust conduits 138 extending through aft end 104 at a radial angle (α) upward from cooling passage 132/toward flange 130, the cooling fluid may be exhausted from aft end exhaust conduits 138 directly toward flange 130 as well. Flange 130 may than direct the post-cooling fluid radially back toward base portion 126 and/or radially away from second hook 108 of turbine shroud 100. Additionally, flange 130 may prevent the post-cooling fluid exhausted from aft end exhaust conduits 138 from flowing radially around flange 130 and away from base portion 126. As discussed herein, the redirecting of the post-cooling fluid by flange 130 may prevent the post-cooling fluid from flowing over and/or contacting components of turbine 28 positioned radially adjacent flange 130 and radially opposite or outward from base portion 126 of turbine shroud 100 (e.g., casing 26, coupling component 52 (*see.* FIGs. 2 and 10). Furthermore, flange 130 may also absorb and/or dissipate at least a portion of the heat transferred to post-cooling fluid from turbine shroud 100 while the cooling fluid flows through cooling passage 132. The post-cooling fluid that may contact and/or be redirected by flange 130 may continue to flow axially away from/downstream of turbine shroud 100 toward a downstream component of turbine 28 (e.g., stator vanes 40). As discussed herein, the downstream component may utilized the post-cooling fluid from turbine shroud 100 for additional processing (e.g., for cooling purposes).

FIGs. 7-9 show additional non-limiting examples of turbine shroud 100. More specifically, FIGs. 7-9 show side cross-sectional views of various non-limiting examples of turbine shroud 100 that may be used within turbine 28 of gas turbine system 10 (*see,* FIG. 1). It is understood that similarly numbered and/or named components may function in a substantially similar fashion. Redundant explanation of these components has been omitted for clarity.

As shown in FIG. 7, flange 130 of turbine shroud 100 may be substantially angled. That is, flange 130 may angularly (β) extend from aft end 104 of turbine shroud 100. In the non-limiting example, flange 130 may extend at an angle (β) that is radially toward second hook 108 of turbine shroud 100. More specifically, flange 130 may extend radially outward toward second hook 108 and/or radially outward or away from base portion 126 of turbine shroud 100. The angle (β) in which flange 130 extends from aft end 104 may substantially similar or different than the angle (α) in which the plurality of aft end exhaust conduits 138 extend through turbine shroud 100.

Turning to FIG. 8, and similar to the non-limiting example shown and discussed herein with respect to FIG. 7, flange 130 of turbine shroud 100 may be substantially angled. That is, flange 130 may extend angularly (β) from aft end 104 of turbine shroud 100. Distinct for FIG. 7, flange 130 as shown in FIG. 8 may extend at an angle (β) that is radially toward base portion 126 of turbine shroud 100. More specifically, flange 130 may extend radially inward toward base portion 126 and/or radially inward or away from second hook 108 of turbine shroud 100. Additionally, and as shown in FIG. 8, flange 130 may extend radially inward toward the plurality of aft end exhaust conduits 138.

In the non-limiting example shown in FIG. 9, flange 130 extending axially from aft end 104 may be substantially planar, axially oriented, and/or substantially parallel with axis (A) and/or inner surface 124 of base portion 126, as similarly discussed herein. However, distinct from the non-limiting example shown and discussed herein with respect to FIG. 6, flange 130 may extend axially beyond base portion 126. That is, and as shown in FIG. 9, flange 130 may extend axially from aft end 104 beyond base portion 126, such that the downstream most portion of aft end 104 for turbine shroud 100 is flange 130.

Additionally as shown in FIG. 9, turbine shroud 100 may be formed from two separate and/or distinct components or parts. More specifically, impingement portion 128 of turbine shroud 100 may be distinct from the remainder of turbine shroud 100 including hooks 106, 108, base portion 126, flange 130, and so on. In the non-limiting impingement portion 128 may be formed from a separate plate 140 that may be coupled or affixed to the remainder of turbine shroud 100 and positioned adjacent cooling chamber 122. Plate 140 forming impingement portion 128 may include outer portion 120 and impingement openings formed there through. As discussed herein, plate 140 may be coupled or affixed to the remainder of turbine shroud 100 using any suitable joining process to define/form cooling passage 132 and ultimately form turbine shroud 100.

FIG. 10 shows an enlarged view of a portion of FIG. 2. More specifically, FIG. 10 shows an enlarged view of a portion of turbine 28 of gas turbine system 10 (*see,* FIG. 1) including a portion of casing 36, coupling component 52, stator vane 40, and turbine shroud 100. It is understood that similarly numbered and/or named components may function in a substantially similar fashion. Redundant explanation of these components has been omitted for clarity.

Additionally as shown in FIG. 10, turbine 28 of gas turbine system 10 may also include a seal 142. Seal 142 may extend between stator vane 40 and turbine shroud 100. More specifically, seal 142 may extend between aft end 104 of turbine shroud 100 and a forward end of stator vane 40. As shown in the non-limiting example, seal 142 may also contact and/or be secured on base portion 126 of turbine shroud 100, adjacent aft end 104, and outer platform 42 of stator vane 40. Seal 142 may contact and/or be secured to base portion 128 turbine shroud 100 and outer platform 42 of stator vane 40 to form or define a portion of the flow path (FP) between turbine shroud 100 and stator vane 40. Additionally, seal 142 may also at least partially define and/or form, along with casing 36, a cooling fluid path 144 that may be formed between turbine shroud 100 and stator vane 40. As discussed herein, seal 142 may prevent combustion gases 26 from undesirably exiting the flow path (FP) defined by turbine shroud 100 and outer platform 42 of stator vane 40, as well as prevent cooling fluid (e.g., post-cooling fluid) exhausted from turbine shroud 100 from entering the flow path (FP) and undesirably mixing with combustion gases 26.

Seal 142 may also be positioned on turbine shroud radially between flange 130 and base portion 126 of turbine shroud 100. As such, and as shown in FIG. 10, the plurality of aft end exhaust conduits 138 may be positioned radially between flange 130 and seal 142 contacting base portion 126. Furthermore, flange 130 may also be positioned radially between turbine casing 36/coupling component 52 of turbine 28 (*see,* FIGs. 2 and 10), and cooling passage 132 formed or positioned within base portion 126 and/or the plurality of aft end exhaust conduits 138. As discussed herein, during operation cooling fluid exhausted from the plurality of aft end exhaust conduits 138 extending angularly through aft end 104 of turbine shroud 100 may contact flange 130, and prevented from coming in direct contact with coupling component 52 of casing 36. Additionally, flange 130 may redirect the exhausted cooling fluid radially inward and/or radially away from coupling component 52 and/or casing 36, and/or toward seal 142. As the cooling fluid is redirected by flange 130, it may flow downstream toward stator vane 40 and may be subsequently utilized by stator vane 40. For example, the cooling fluid exhausted from turbine shroud 100 and redirected by flange 130 may be used to cool retaining component 41 and/or outer platform 42 of stator vane 40 during operation of turbine 28.

The portion of turbine 28 shown in FIG. 10 may represent, for example, a first stage of blades 38 and stator vanes 40. As such, seal 142 may only be positioned between aft end 104 of turbine shroud 100 and outer platform 42 of stator vane 40. In downstream stages (e.g., intermediate or final stages), the plurality of blades 38 within that stage may include stator vanes 40 positioned both upstream and downstream of blades 38 and/or turbine shroud 100. In these stages of turbine 28, seal 142 may be presented and/or positioned between each set of stator vanes 40. More specifically, a seal 142 may be positioned between and/or may contact base portion 126 of turbine shroud 100, adjacent aft end 104, as well as a forward end of outer platform 42 of stator vane 40 positioned downstream of turbine shroud 100, as similarly discussed herein with respect to FIG. 10. Additionally, a distinct seal 142 may be positioned between and/or may contact base portion 126 of turbine shroud 100, adjacent forward end 102, as well as an aft end of outer platform 42 for stator vane 40 positioned upstream of turbine shroud 100. As similarly discussed herein, seal 142 may define and/or separate the flow path (FP) for combustion gases 26 of turbine 28 and cooling fluid path 144.

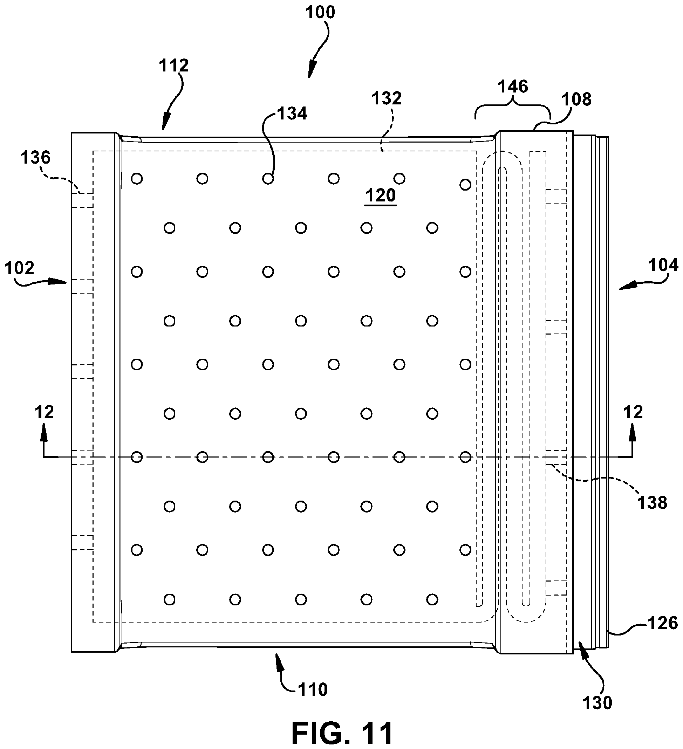

FIGs. 11-13 show additional non-limiting examples of turbine shroud 100. More specifically, FIGs. 11-13 show various views of non-limiting examples of turbine shroud 100 that may be used within turbine 28 of gas turbine system 10 (*see,* FIG. 1). It is understood that similarly numbered and/or named components may function in a substantially similar fashion. Redundant explanation of these components has been omitted for clarity.

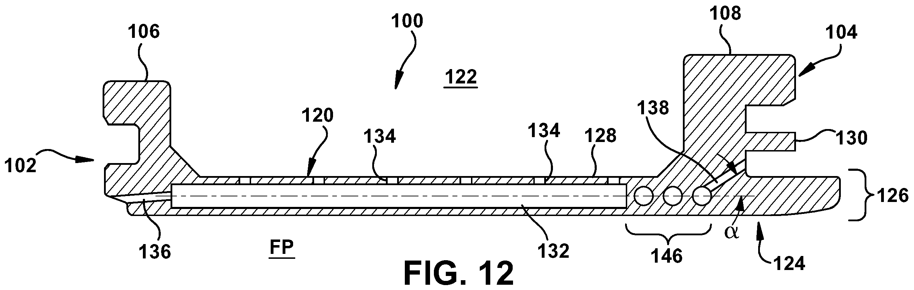

FIGs. 11 and 12 show various views of an additional non-limiting example of turbine shroud 100 of turbine 28 for gas turbine system 10 of FIG. 1. Specifically, FIG. 11 shows a top view of turbine shroud 100, and FIG. 12 shows a cross-sectional side view of turbine shroud 100. Turbine shroud 100 shown in FIGs. 11 and 12 show may include a non-limiting example of serpentine pattern 146 formed adjacent aft end 104. That is, and as shown in FIGs. 11 and 12, serpentine pattern 146 may extend, serpentine, and/or include a plurality of turns that span between first side 110 and second side 112, adjacent aft end 104 of turbine shroud 100. Each portion of the opening of serpentine pattern 146 may also radially extend between base portion 126 and impingement portion 128 of turbine shroud 100. In the non-limiting example, serpentine pattern 146 formed adjacent aft end 104 may be in fluid communication with cooling passage 132 and each of the plurality of aft end exhaust conduits 138 extending through aft end 104 of turbine shroud 100. Serpentine pattern 146 may aid in the heat transfer and/or cooling of turbine shroud 100 during operation of gas turbine system 10, as discussed herein. As shown in FIG. 12, the cooling fluid may flow from cooling passage 132 to and through serpentine pattern 164, and back-and-forth between first side 11 and second side 112, before being exhausted from one of the plurality of aft end exhaust conduits 138 extending at a radial angle (α). It is understood that the number of turns included in serpentine pattern 146 is illustrative. As such, serpentine pattern 146 formed adjacent aft end 104 may include more or less turns than shown in FIGs. 11 and 12. Additionally, it is understood that serpentine patter 146 may also be formed in forward end 102 in addition to, or alternative to, being formed in aft end 104 as shown in FIGs. 11 and 12.

In an additional non-limiting example, serpentine pattern 146 may be oriented within turbine shroud 100 in a distinct manner. For example, turbine shroud 100 may include a distinct serpentine pattern 146 (not shown) that may extend, serpentine, and/or include a plurality of turns that span between base portion 126 and impingement portion 128. In the non-limiting example (not shown), serpentine pattern 146 may have a final turn that may be in fluid communication each of the plurality of aft end exhaust conduits 138 extending through aft end 104 of turbine shroud 100.

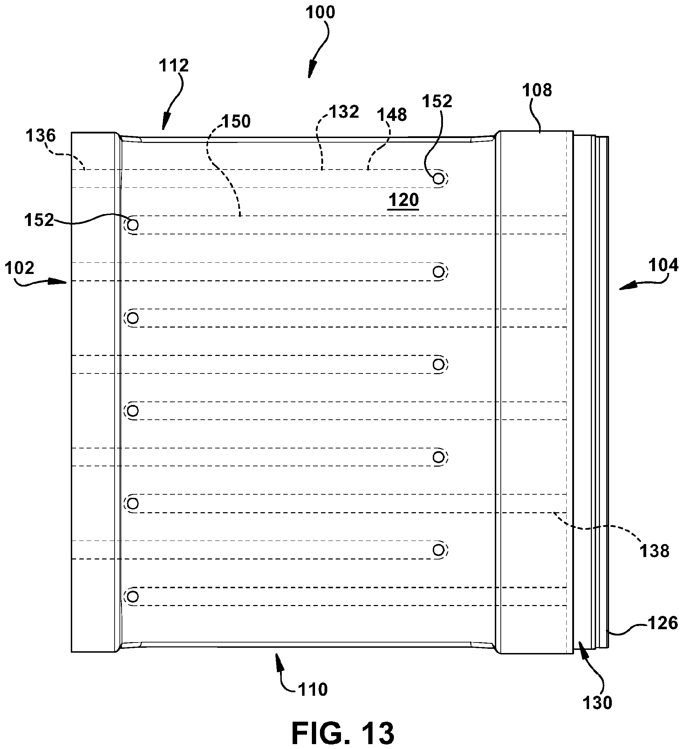

FIG. 13 shows another non-limiting example of turbine shroud 100. In the non-limiting example, turbine shroud 100 may include a plurality of channels 148, 150. More specifically, turbine shroud 100 may include a plurality of channels 148, 150, where each channel 148, 150 may include, be in direct fluid communication and/or may be fluidly coupled to a corresponding (single) opening 152 formed in/through impingement portion 128. Additionally as shown in FIG. 13, channels 148 may extend toward forward end 102, which channels 150 may extend toward aft end 104. As such, each channel 148 may be in fluid communication and/or may be formed integrally with forward end exhaust conduit 136 extending through forward end 102 of turbine shroud 100. Furthermore, each channel 150 may be in fluid communication and/or may be formed integrally with aft end exhaust conduit 138 extending through aft end 102 of turbine shroud 100, at a radial angle (α) *(see,* FIG. 6).

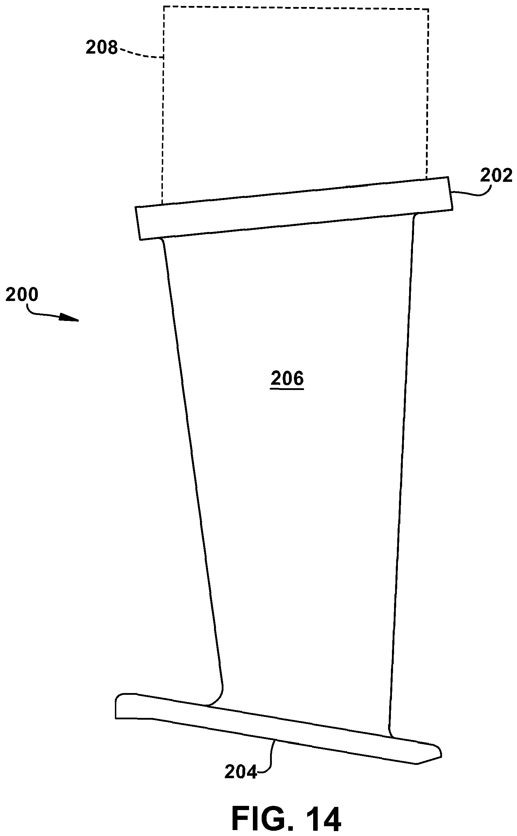

FIGs. 14-17 show various views of a stator vane 200. More specifically, FIGs. 14-16 show various views of non-limiting examples of stator vane 200 that may be used within turbine 28 of gas turbine system 10 (*see,* FIGs. 1 and 2). Stator vane 200 shown in FIGs. 14 may include substantially similar components and/or features as those discussed herein with respect to stator vanes 40 shown in FIG. 2. For example, stator vane 200 may include an outer platform 202, an inner platform 204 positioned opposite the outer platform 202, and an airfoil 206 positioned between outer platform 202 and inner platform 204, respectively. It is understood that similarly numbered and/or named components may function in a substantially similar fashion. Redundant explanation of these components has been omitted for clarity.

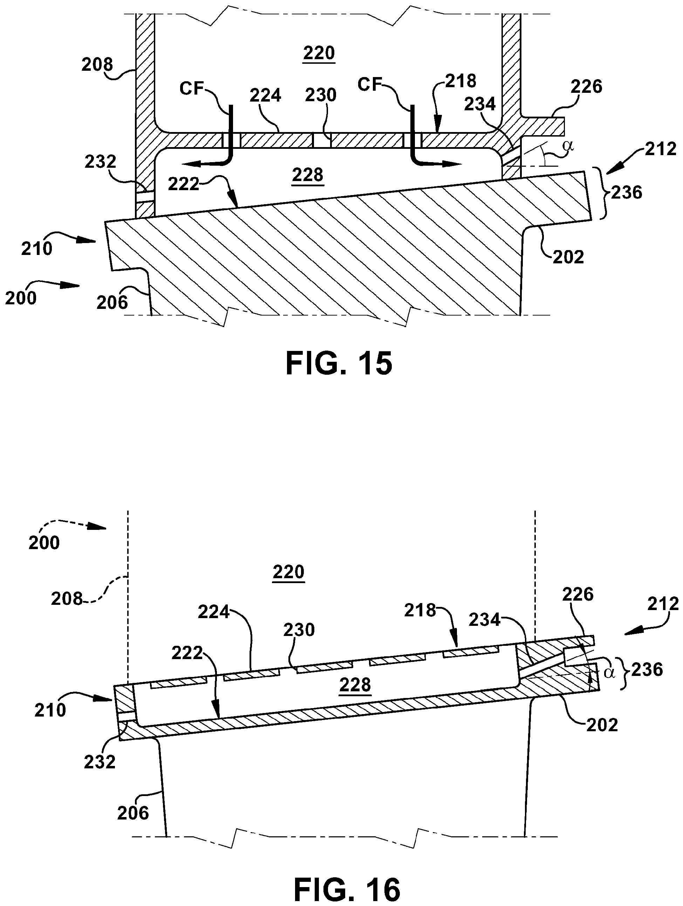

Additionally as shown in FIG. 14, stator vane 200 may also include a retaining component 208. Retaining component 208 is shown in FIG. 14 in phantom as optional. That is, in some non-limiting examples stator vane 200 may include retaining component 208 for coupling and/or positioning stator vane 200 circumferentially about casing 36 of turbine 28 *(see,* FIG. 2). As shown in the non-limiting example, retaining component 208 may be coupled and/or connected to outer platform 202 of stator vane 200. In other non-limiting examples stator vane 200 may not include retaining component 208 (*see.* FIG. 16). Rather, outer platform 202 may contact and/or be coupled to distinct portions or components of turbine 28 (e.g., turbine shroud 100) to be positioned and/or secured within turbine 28 during operational.

Turning to FIG. 15, a cross-sectional side view of stator vane 200 is shown. Specifically, FIG. 15 shows a cross-sectional side view of a portion of stator vane 200 taken along line 15-15 of FIG. 14. As shown in FIG. 15, and discussed herein, stator vane 200 may include similar features as those discussed herein with respect to turbine shroud 100 shown in FIGs. 3-9, that may aid in directing post-cooling fluid exhausted from stator vane 200. Stator vane 200 may also include various ends, sides, and/or surfaces. For example, and as shown in FIG. 15, stator vane 200 may include a forward end 210 and an aft end 212 positioned opposite forward end 210. Forward end 210 may be positioned upstream of aft end 212, such that combustion gases 26 flowing through the flow path (FP) defined within turbine 28 may flow adjacent forward end 210 before flowing by adjacent aft end 212 of stator vane 200. As shown in FIG. 15 stator vane 200 may also include an outer surface 218. More specifically in the non-limiting example where stator vane 200 includes retaining component 208, retaining component 208 may include outer surface 218. Outer surface 218 may face a cooling chamber 220 formed between stator vane 200 and turbine casing 36 *(see,* FIG. 2). More specifically, outer surface 218 may be positioned, formed, face, and/or directly exposed in cooling chamber 220 formed between retaining component 208 of stator vane 200 and turbine casing 36 of turbine 28. As discussed herein, cooling chamber 220 formed between stator vane 200 and turbine casing 36 may receive and/or provide cooling fluid to stator vane 200 during operation of turbine 28. In addition to facing cooling chamber 220, outer surface 218 of stator vane 200 may also be formed and/or positioned between forward end 210 and aft end 212 of stator vane 200.

Stator vane 200 may also include inner surface 222 formed opposite outer surface 218. That is, and as shown in the non-limiting example in FIG. 15, inner surface 222 of stator vane 200 may be formed radially opposite outer surface 218. In the non-limiting example, inner surface 222 may include and/or may be at least partially defined by outer platform 202 of stator vane 200, which faces the hot gas flow path (FP) of combustion gases 26 flowing through turbine 28 *(see,* FIG. 2). As discussed herein, inner surface 222 at least partially defined by outer platform 202 of stator vane 200 may at least partially form and/or define at least one cooling passage within stator vane 200/retaining component 208 that may be used to cool retaining component 208 and/or outer platform 202 during operation of turbine 28. In the non-limiting example, it may be determined the entirety of outer platform 202 may form a "base portion 236" of stator vane 200.

Stator vane 200 may include an impingement portion 224. Impingement portion 224 may be formed as an integral portion of stator vane 200. Impingement portion 224 may include outer surface 218, and/or outer surface 218 may be formed on impingement portion 224 of stator vane 200. Impingement portion 224 of stator vane 200 may be formed, positioned, and/or extend between forward end 210 and aft end 212 of stator vane 200. As shown in FIG. 15, impingement portion 224 may be positioned radially adjacent inner surface 222 and/or may positioned radially adjacent outer platform 202. Impingement portion 224 of stator vane 200 may at least partially form and/or define at least one cooling passage within stator vane 200, as discussed herein.

As shown in FIG. 15, stator vane 200 may also include a flange 226. Flange 226 may extend from aft end 212 of stator vane 200. More specifically, flange 226 may extend (substantially) axially from aft end 212 of retaining component 208, and may be positioned radially adjacent outer platform 202. In the non-limiting example shown in FIG. 15, flange 226 may be substantially planar, axially oriented, and/or substantially parallel with axis (A). As shown, flange 226 may be formed integral with aft end 212 of retaining component 208 for stator vane 200. In another non-limiting example (not shown), flange 226 may be formed as a distinct feature and/or component that may subsequently installed and/or affixed to aft end 212 of retaining component 208, prior to stator vane 200 be implemented within gas turbine system 10 (*see.* FIGs. 1 and 2). Additionally as shown in the non-limiting example of FIG. 15, outer platform 202 of stator vane 200 may extend axially beyond and/or may extend axially further than flange 226. In other non-limiting examples, flange 226 may extend axially beyond outer platform 202, or may extend axial from aft end 212 to be radially aligned with outer platform 202 (not shown). As discussed herein, flange 226 may direct post-cooling fluid from stator vane 200 away from casing 36 and/or may block the post-cooling fluid from stator vane 200 from contacting casing 36. Additionally, and as discussed herein, flange 226 may also absorb heat transferred to the post-cooling fluid that was previously used to cool stator vane 200.

Stator vane 200 may also include at least one cooling passage formed therein for cooling stator vane 200 during operation of turbine 28 of gas turbine system 10. As shown in FIG. 15, stator vane 200 may include a cooling passage 228 formed, positioned, and/or extending within stator vane 200. More specifically, cooling passage 228 of stator vane 200 may extend within retaining component 208 of stator vane 200 between and/or adjacent forward end 210, and aft end 212. Additionally, and as shown in FIG. 15, cooling passage 228 may extend within stator vane 200 (radially) between and/or may be at least partially defined by outer platform 202 and impingement portion 224. Cooling passage 228 may also be positioned and/or formed substantially adjacent inner surface 222. As discussed herein, cooling passage 228 may receive cooling fluid from cooling chamber 220 to cool stator vane 200. The size (e.g., radial-opening height) of cooling passage 228 may be dependent on a variety of factors including, but not limited to, the size of stator vane 200, the thickness of outer platform 202 and/or impingement portion 224, the cooling demand for stator vane 200, and/or so on.

In order to provide cooling passage 228 with cooling fluid, stator vane 200 may also include a plurality of impingement openings 230 formed therethrough. That is, and as shown in FIG. 15, stator vane 200 may include a plurality of impingement openings 230 formed through outer surface 218, and more specifically impingement portion 224, of stator vane 200. The plurality of impingement openings 230 formed through outer surface 218 and/or impingement portion 224 may fluidly couple cooling passage 228 to cooling chamber 220. As discussed herein, during operation of gas turbine system 10 *(see,* FIG. 1) cooling fluid flowing through cooling chamber 220 may pass or flow through the plurality of impingement openings 230 to cooling passage 228 to substantially cool stator vane 200.

It is understood that the size and/or number of impingement openings 230 formed through outer surface 218 and/or impingement portion 224, as shown in FIG. 15, is merely illustrative. As such, stator vane 200 may include larger or smaller impingement openings 230, and/or may include more or less impingement openings 230 formed therein. Additionally, although the plurality of impingement openings 230 are shown to be substantially uniform in size and/or shape, it is understood that each of the plurality of impingement openings 230 formed on stator vane 200 may include distinct sizes and/or shapes. The size, shapes, and/or number of impingement openings 230 formed in stator vane 200 may be dependent, at least in part on the operational characteristics (e.g., exposure temperature, exposure pressure, position within turbine casing 36, and the like) of gas turbine system 10 during operation. Additionally, or alternatively, the size, shapes, and/or number of impingement openings 230 formed in stator vane 200 may be dependent, at least in part on the characteristics of stator vane 200/cooling passage 228.

Stator vane 200 may include a plurality of forward end exhaust conduits 232 (one shown). The plurality of forward end exhaust conduits 232 may be in fluid communication with cooling passage 228. More specifically, the plurality of forward end exhaust conduits 232 may each be in fluid communication with and may extend axially from cooling passage 228 of stator vane 200. In the non-limiting example shown in FIG. 15, the plurality of forward end exhaust conduits 232 may extend through retaining component 208 of stator vane 200, from cooling passage 228 to forward end 210. In addition to being in fluid communication with cooling passage 228, the plurality of forward end exhaust conduits 232 may be in fluid communication with an area within turbine 28 *(see,* FIG. 2) that is positioned upstream and axially aligned with forward end 210 of stator vane 200. During operation, and as discussed herein, the plurality of forward end exhaust conduits 232 may discharge cooling fluid (e.g., post-cooling fluid) from cooling passage 228, adjacent and upstream of forward end 210 of stator vane 200.

It is understood that stator vane 200 may include any number of forward end exhaust conduits 232 formed therein, and in fluid communication with cooling passage 228. Additionally, although shown as being substantially round/circular and linear, it is understood that forward end exhaust conduit(s) 232 may be non-round and/or non-linear openings, channels and/or manifolds. Where forward end exhaust conduit(s) 232 are formed to be non-round and/or non-linear, the direction of flow of the cooling fluid may vary to improve the cooling of forward end 210 of stator vane 200. Furthermore, forward end exhaust conduit(s) 232 may also have varying sizes between each forward end exhaust conduit 232 dependent on the cooling needs of stator vane 200 during operation.

Also shown in FIG. 15, stator vane 200 may include a plurality of aft end exhaust conduits 234. The plurality of aft end exhaust conduits 234 may be in fluid communication with cooling passage 228, and in turn may be in fluid communication with cooling chamber 220. More specifically, the plurality of aft end exhaust conduits 234 may be in fluid communication with and may extend from cooling passage 228 of stator vane 200. Additionally, and as a result of cooling passage 228 being in direct fluid communication with cooling chamber 220, each of the plurality of aft end exhaust conduits 234 may also be in fluid communication with cooling chamber 220. As shown in FIG. 15, the plurality of aft end exhaust conduits 234 may extend through retaining component 208 of stator vane 200, from cooling passage 228 to and through aft end 212 of stator vane 200. Additionally, the plurality of aft end exhaust conduits 234 may also extend and/or may be positioned radial between outer platform 202 (e.g., base portion 236) and flange 226 of stator vane 200. In the non-limiting example, the plurality of aft end exhaust conduits 234 may also extend through stator vane 200 at an angle (α). That is, and as shown in FIG. 15, the plurality of aft end exhaust conduits 234 may be angled radially outward from cooling passage 228 toward flange 226, and/or may extend through stator vane 200 at a radial angle (α). The plurality of aft end exhaust conduits 234 may also be in fluid communication with an area of turbine 28 *(see,* FIG. 2) that may be positioned downstream of and axially adjacent aft end 212 of stator vane 200. As discussed herein, the plurality of aft end exhaust conduits 234 may discharge cooling fluid (e.g., post-cooling fluid) from cooling passage 228, adjacent and downstream of aft end 212 of stator vane 200.

Similar to forward end exhaust conduits 232, it is understood that stator vane 200 may include any number of aft end exhaust conduits 234 formed therein, and in fluid communication with cooling passage 228, and in turn in fluid communication with cooling chamber 220. Additionally, although shown as being substantially round/circular and linear, it is understood that aft end exhaust conduits 234 may be non-round and/or non-linear openings, channels and/or manifolds. Where aft end exhaust conduit(s) 234 are formed to be non-round and/or non-linear, the direction of flow of the cooling fluid may vary to improve the cooling of aft end 212 of stator vane 200. Furthermore, aft end exhaust conduit(s) 234 may also have varying sizes between each aft end exhaust conduits 234 dependent on the cooling needs of stator vane 200 during operation.

During operation of gas turbine system 10 *(see,* FIG. 1), cooling fluid (CF) may flow through and cool stator vane 200. More specifically, as stator vane 200 is exposed to combustion gases 26 flowing through the hot gas flow path of turbine 28 *(see,* FIG. 2) during operation of gas turbine system 10 and increases in temperature, cooling fluid (CF) may be provided to and/or may flow through cooling passage 228 formed between outer platform 202 and impingement portion 224 to cool retaining component 208 and/or outer platform 202 of stator vane 200. With respect to FIG. 15, the various arrows may represent and/or may illustrates the flow path of the cooling fluid (CF) as it flows through stator vane 200. In a non-limiting example, cooling fluid (CF) may first flow from cooling chamber 220 to cooling passage 228 via the plurality of impingement openings 230 formed through outer surface 218 and/or impingement portion 224 of stator vane 200. The cooling fluid (CF) flowing into/through cooling passage 228 may cool and/or receive heat from outer surface 218/impingement portion 224 and/or inner surface 222/outer platform 202. Once inside cooling passage 228, the cooling fluid (CF) may be dispersed and/or may flow axially toward one of forward end 210 or aft end 212 of stator vane 200. Additionally, the cooling fluid (CF) may be dispersed and/or may flow circumferentially toward one of first side 110 or second side 112 of stator vane 200.

Once the cooling fluid (CF) within cooling passage 228 has flowed to the respect end 102,104/side 110, 112 of stator vane 200, the cooling fluid (CF) may flow to through respective exhaust conduits 232, 234. For example, a portion of the cooling fluid (CF) that flows axially through cooling passage 228 toward forward end 210 may be dispensed and/or exhausted from stator vane 200 via the plurality of forward end exhaust conduits 232 in fluid communication with cooling passage 228 and formed or extending through forward end 210 of stator vane 200.

Furthermore, the portion of the cooling fluid (CF) that flows axially through cooling passage 228 toward aft end 212 may be dispensed and/or exhausted from stator vane 200 via the plurality of aft end exhaust conduits 234 in fluid communication with cooling passage 228 and formed or extending through aft end 212 of stator vane 200. Once exhausted from aft end exhaust conduits 234, the cooling fluid (e.g., post-cooling fluid) may flow toward, contact, and/or may be redirected by flange 226 of stator vane 200. That is, as a result of the plurality of aft end exhaust conduits 234 extending through aft end 212 at a radial angle (α) upward from cooling passage 228/toward flange 226, the cooling fluid may be exhausted from aft end exhaust conduits 234 directly toward flange 226 as well. Flange 226 may than direct the post-cooling fluid radially back toward outer platform 202 and/or radially away distinct portions of retaining component 208 of stator vane 200/casing 36 (*see,* FIG. 2). Additionally, flange 226 may prevent the post-cooling fluid exhausted from aft end exhaust conduits 234 from flowing radially around flange 226 and away from outer platform 202. As discussed herein, the redirecting of the post-cooling fluid by flange 226 may prevent the post-cooling fluid from flowing over and/or contacting components of turbine 28 positioned radially adjacent flange 226 and radially opposite or outward from outer platform 202 of stator vane 200 (e.g., casing 26) (*see.* FIG. 2). Furthermore, flange 226 may also absorb and/or dissipate at least a portion of the heat transferred to post-cooling fluid from stator vane 200 while the cooling fluid flows through cooling passage 228. The post-cooling fluid that may contact and/or be redirected by flange 226 may continue to flow axially away from/downstream of stator vane 200 toward a downstream component of turbine 28 (e.g., turbine shroud 100). As discussed herein, the downstream component may utilized the post-cooling fluid from stator vane 200 for additional processing (e.g., for cooling purposes).

FIG. 16 shows another non-limiting example of stator vane 200. In the non-limiting example stator vane 200 may or not include retaining component 208 (shown in phantom as optional). In the non-limiting example, the features used to cool stator vane 200 may be formed and/or positioned directly within outer platform 202 of stator vane 200. That is, and as shown in FIG. 16, outer surface 218, inner surface 222, impingement portion 224, cooling passage 228, and openings 230 may all be formed in and/or integrally with outer platform 202 of stator vane 200. Furthermore, and as shown in FIG. 16, flange 226 of stator vane 200 may be formed integrally with outer platform 202. More specifically, flange 226 may be formed integrally within outer platform 202, and radially above or adjacent base portion 236 of outer platform 202 that may be exposed to hot gas during operational of turbine 28 (*see,* FIG. 2), as discussed herein. Additionally as shown in FIG. 16, flange 226 may extend substantially axially from cooling passage 228 formed in outer platform 202.

Furthermore, and as shown in FIG. 16, exhaust conduits 232, 234 may be formed within and may extend through outer platform 202. More specifically, the plurality of forward end exhaust conduits 232 may extend through forward end 210 of outer platform 202 to exhaust cooling fluid from cooling chamber 228 formed within outer platform 202. Additionally, each of the plurality of aft end exhaust conduits 234 may extend through aft end 212 of outer platform 202 for stator vane 200. In the non-limiting example, the plurality of aft end exhaust conduits 234 may extend between and/or through aft end 212 of outer platform 202 radially between base portion 236 of outer platform 202 and flange 226; also formed integral with outer platform 202. As similarly discussed herein, the plurality of aft end exhaust conduits 234 may extend through aft end 212 of outer platform 202 at a radial angle (α) upward toward flange 226, such that the cooling fluid may be exhausted from aft end exhaust conduits 234 directly toward flange 226.

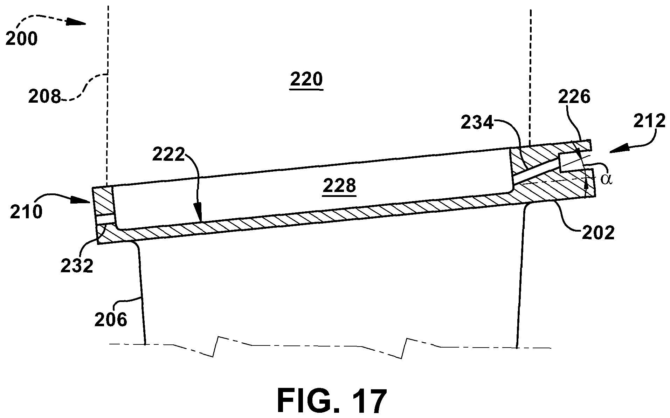

FIG. 17 shows an additional, non-limiting example of stator vane 200. In the non-limiting example, cooling passage 228 formed in a portion of outer platform 202 of stator vane 200 may be entirely exposed and/or open to cooling chamber 220 of stator vane 200. In one example, cooling chamber 220 may be formed within retaining component 208 (shown in phantom as optional). In another non-limiting example, cooling chamber 220 may represent a space between outer platform 202 of stator vane 200 and casing 36 of turbine 28 (*see,* FIG. 2). As such, cooling fluid (CF) used to cool outer platform 202 of stator vane 200 may flow directly from cooling chamber 220 to cooling passage 228, and subsequently exhausted from conduits 232, 234, as discussed herein.

Technical effect is to provide hot gas path components (e.g., turbine shrouds, stator vanes) that include a plurality of angled exhaust conduits and an aft end flange. The hot gas path components including the angled exhaust conduits and aft end flange prevents post-cooling fluid from being undesirably, exhausted directly toward and/or from undesirably contacting a turbine casing or coupling component of a turbine that secures the hot gas path components therein.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" as applied to a particular value of a range applies to both values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A turbine shroud (100) coupled to a turbine (28) casing (36) of a turbine system (10), the turbine shroud (100) comprising:
a forward end (102) including a first hook (106) coupled to the turbine (28) casing (36);
an aft end (104) positioned opposite the forward end (102), the aft end (104) including a second hook (108) coupled to the turbine (28) casing (36);
a base portion (126) extending between the forward end (102) and the aft end (104) and positioned radially opposite the first hook (106) and the second hook (108) coupled to the turbine (28) casing (36), the base portion (126) including an inner surface (124) facing a hot gas flow path for the turbine system (10);
a flange (130) extending from the aft end (104) and positioned radially between the base portion (126) and the second hook (108);
a cooling passage (132) positioned within the base portion (126), adjacent the inner surface (124); and
at least one aft end exhaust conduit (138) in fluid communication with the cooling passage (132), the at least one aft end exhaust conduit (138) extending through the aft end (104), radially between the base portion (126) and the flange (130);
**characterized in that**,
the at least one aft end exhaust conduit (138) is angled radially outward from the cooling passage (132, 228), toward the flange (130, 226), such that a cooling fluid in the cooling passage (132) is exhausted directly towards the flange (130) from the aft end exhaust conduit (138).

2. The turbine shroud (100) of claim 1, further comprising:
a first side (110) formed proximate and extending between the forward end (102) and the aft end (104); and
a second side (112) positioned opposite the second side (112), the second side (112) formed proximate and extending between the forward end (102) and the aft end (104).

3. The turbine shroud (100) of claim 2, wherein the flange (130) extends from the aft end (104) between the first side (110) and the second side (112).

4. The turbine shroud (100) of claim 1, wherein the flange (130) angularly extends from the aft end (104) and extends one of:
radially outward toward the second hook (108), or
radially inward toward the base portion (126).

5. The turbine shroud (100) of claim 1, wherein the flange (130) extends axially beyond the base portion (126).

6. The turbine shroud (100) of claim 1, wherein the flange (130) is positioned radially between the cooling passage (132) and the turbine (28) casing (36).

7. A turbine system (10) comprising:
a turbine (28) casing (36); and
a first stage positioned within the turbine (28) casing (36), the first stage including:
a plurality of turbine blades (38) positioned within the turbine (28) casing (36) and circumferentially about a rotor (30);
a plurality of stator vanes (40, 200) positioned within the turbine (28) casing (36), downstream of the plurality of turbine blades (38); and
a plurality of turbine shrouds (100) positioned radially adjacent the plurality of turbine (28) blades (38) and upstream of the plurality of stator vanes (40, 200), each of the plurality of turbine shrouds (100) being a turbine shroud (100) according to any preceding claim.

8. The turbine system (10) of claim 7, further comprising:
a seal (142) extending between each of the plurality of stator vanes (40, 200) and the plurality of turbine shrouds (100), the seal (142) contacting:
the base portion (126) of each of the plurality of turbine shrouds (100), adjacent the aft end (104); and
an outer platform (42) of each of the plurality of stator vanes (40, 200).

9. The turbine system (10) of claim 8, wherein the at least one aft end exhaust conduit (138) of each of the plurality of turbine shrouds (100) is positioned radially between the flange (130) and the seal (142) contacting the base portion (126).

10. A stator vane (40, 200) positioned within a turbine (28) casing (36) of a turbine system (10), the stator vane (40, 200) comprising:
a forward end (210);
an aft end (212) positioned opposite the forward end (210);
a base portion (236) extending between the forward end (210) and the aft end (212) and positioned radially opposite the turbine (28) casing (36), the base portion (236) including an inner surface (222) facing a hot gas flow path for the turbine system (10);
a flange (226) extending from the aft end (212) and positioned radially between the base portion (236) and the turbine (28) casing (36);
a cooling passage (228) positioned adjacent the base portion (236) and the inner surface (222); and
at least one aft end exhaust conduit (234) in fluid communication with the cooling passage (228), the at least one aft end exhaust conduit (234) extending through the aft end (212), radially between the base portion (236) and the flange (226);
**characterized in that**,the at least one aft end exhaust conduit (234) is angled radially outward from the cooling passage (228), toward the flange (226), such that a cooling fluid in the cooling passage (228) is exhausted directly towards the flange (226) from the aft end exhaust conduit (234).

11. The stator vane (40, 200) of claim 10, further comprising:
an outer platform (42, 202) positioned radially adjacent the turbine (28) casing (36), the outer platform (42, 202) including at least a portion of the base portion (236).

## Patentansprüche

1. Turbinenummantelung (100), die mit einem Gehäuse (36) einer Turbine (28) eines Turbinensystems (10) gekoppelt ist, die Turbinenummantelung (100) umfassend:
ein Vorderende (102), einschließlich eines ersten Hakens (106), der mit dem Gehäuse (36) der Turbine (28) gekoppelt ist;
ein Hinterende (104), das gegenüber dem Vorderende (102) positioniert ist, wobei das Hinterende (104) einen zweiten Haken (108) einschließt, der mit dem Gehäuse (36) der Turbine (28) gekoppelt ist;
einen Basisabschnitt (126), der sich zwischen dem Vorderende (102) und dem Hinterende (104) erstreckt und gegenüber dem ersten Haken (106) und dem zweiten Haken (108) radial positioniert ist, der mit dem Gehäuse (36) der Turbine (28) gekoppelt ist, wobei der Basisabschnitt (126) eine Innenoberfläche (124) einschließt, die einem Heißgasströmungspfad für das Turbinensystem (10) zugewandt ist;
einen Flansch (130), der sich von dem Hinterende (104) erstreckt und zwischen dem Basisabschnitt (126) und dem zweiten Haken (108) radial positioniert ist;
einen Kühlkanal (132), der innerhalb des Basisabschnitts (126) angrenzend an die Innenoberfläche (124) positioniert ist; und
mindestens eine Hinterendabgasleitung (138) in Fluidkommunikation mit dem Kühlkanal (132), wobei sich die mindestens eine Hinterendabgasleitung (138) durch das Hinterende (104) zwischen dem Basisabschnitt (126) und dem Flansch (130) radial erstreckt;
**dadurch gekennzeichnet, dass**
die mindestens eine Hinterendabgasleitung (138) von dem Kühlkanal (132, 228) zu dem Flansch (130, 226) hin radial nach außen abgewinkelt ist, derart, dass eine Kühlflüssigkeit in dem Kühlkanal (132) direkt zu dem Flansch (130) hin von der Hinterendabgasleitung (138) ausgestoßen wird.

2. Turbinenummantelung (100) nach Anspruch 1, ferner umfassend:
eine erste Seite (110), die sich zwischen dem Vorderende (102) und dem Hinterende (104) erstreckt und nahe daran ausgebildet ist; und
eine zweite Seite (112), die gegenüber der zweiten Seite (112) positioniert ist, wobei sich die zweite Seite (112) zwischen dem Vorderende (102) und dem Hinterende (104) erstreckt und nahe daran ausgebildet ist.

3. Turbinenummantelung (100) nach Anspruch 2, wobei sich der Flansch (130) von dem Hinterende (104) zwischen der ersten Seite (110) und der zweiten Seite (112) erstreckt.

4. Turbinenummantelung (100) nach Anspruch 1, wobei sich der Flansch (130) von dem Hinterende (104) winklig erstreckt und sich in einem von Folgendem erstreckt:
radial nach außen zu dem zweiten Haken (108) hin oder
radial nach innen zu dem Basisabschnitt (126) hin.

5. Turbinenummantelung (100) nach Anspruch 1, wobei sich der Flansch (130) über den Basisabschnitt (126) hinaus axial erstreckt.

6. Turbinenummantelung (100) nach Anspruch 1, wobei der Flansch (130) zwischen dem Kühlkanal (132) und dem Gehäuse (36) der Turbine (28) radial positioniert ist.

7. Turbinensystem (10), umfassend:
ein Gehäuse (36) einer Turbine (28); und
eine erste Stufe, die innerhalb des Gehäuses (36) der Turbine (28) positioniert ist, wobei die erste Stufe einschließt:
eine Vielzahl von Turbinenschaufeln (38), die innerhalb des Gehäuses (36) der Turbine (28) und
in Umfangsrichtung um einen Rotor (30) herum positioniert sind;
eine Vielzahl von Leitschaufeln (40, 200), die innerhalb des Gehäuses (36) der Turbine (28), stromabwärts der Vielzahl von Turbinenschaufeln (38) positioniert sind; und
eine Vielzahl von Turbinenummantelungen (100), die angrenzend an die Vielzahl von Turbinen(28)-Schaufeln (38) und stromaufwärts von der Vielzahl von Leitschaufeln (40, 200) radial positioniert sind, wobei jede der Vielzahl von Turbinenummantelungen (100) eine Turbinenummantelung (100) nach einem der vorstehenden Ansprüche ist.

8. Turbinensystem (10) nach Anspruch 7, ferner umfassend:
eine Dichtung (142), die sich zwischen jeder der Vielzahl von Leitschaufeln (40, 200) und der Vielzahl von Turbinenummantelungen (100) erstreckt, wobei die Dichtung (142) Folgendes berührt:
den Basisabschnitt (126) von jeder der Vielzahl von Turbinenummantelungen (100) angrenzend an das Hinterende (104); und
eine äußere Plattform (42) von jeder der Vielzahl von Leitschaufeln (40, 200).

9. Turbinensystem (10) nach Anspruch 8, wobei die mindestens eine Hinterendabgasleitung (138) von jeder der Vielzahl von Turbinenummantelungen (100) zwischen dem Flansch (130) und der Dichtung (142), die den Basisabschnitt (126) berührt, radial positioniert ist.

10. Leitschaufel (40, 200), die innerhalb eines Gehäuses (36) einer Turbine (28) eines Turbinensystems (10) positioniert ist, die Leitschaufel (40, 200) umfassend:
ein vorderes Ende (210);
ein Hinterende (212), das gegenüber dem Vorderende (210) positioniert ist;
einen Basisabschnitt (236), der sich zwischen dem Vorderende (210) und dem Hinterende (212) erstreckt und gegenüber dem Gehäuse (36) der Turbine (28) radial positioniert ist, wobei der Basisabschnitt (236) eine Innenoberfläche (222) einschließt, die einem Heißgasströmungspfad für das Turbinensystem (10) zugewandt ist;
einen Flansch (226), der sich von dem Hinterende (212) erstreckt und zwischen dem Basisabschnitt (236) und dem Gehäuse (36) der Turbine (28) radial positioniert ist;
einen Kühlkanal (228), der angrenzend an den Basisabschnitt (236) und die Innenoberfläche (222) positioniert ist; und
mindestens eine Hinterendabgasleitung (234) in Fluidkommunikation mit dem Kühlkanal (228), wobei sich die mindestens eine Hinterendabgasleitung (234) durch das Hinterende (212) zwischen dem Basisabschnitt (236) und dem Flansch (226) radial erstreckt;
**dadurch gekennzeichnet, dass,** die mindestens eine Hinterendabgasleitung (234) von dem Kühlkanal (228) zu dem Flansch (226) hin radial nach außen abgewinkelt ist, derart, dass eine Kühlflüssigkeit in dem Kühlkanal (228) direkt zu dem Flansch (226) hin von der Hinterendabgasleitung (234) ausgestoßen wird.

11. Leitschaufel (40, 200) nach Anspruch 10, ferner umfassend:
eine äußere Plattform (42, 202), die angrenzend an das Gehäuse (36) der Turbine (28) radial positioniert ist, wobei die äußere Plattform (42, 202) mindestens einen Abschnitt des Basisabschnitts (236) einschließt.

## Revendications

1. Enveloppe de turbine (100) accouplée à un carter (36) de turbine (28) d'un système de turbine (10), l'enveloppe de turbine (100) comprenant :
une extrémité avant (102) comportant un premier crochet (106) accouplé au carter (36) de turbine (28) ;
une extrémité arrière (104) positionnée à l'opposé de l'extrémité avant (102), l'extrémité arrière (104) comportant un second crochet (108) accouplé au carter (36) de turbine (28) ;
une partie de base (126) s'étendant entre l'extrémité avant (102) et l'extrémité arrière (104) et positionnée radialement à l'opposé du premier crochet (106) et du second crochet (108) accouplés au carter (36) de turbine (28), la partie de base (126) comportant une surface interne (124) faisant face à un chemin d'écoulement de gaz chaud pour le système de turbine (10) ;
une bride (130) s'étendant depuis l'extrémité arrière (104) et positionnée radialement entre la partie de base (126) et le second crochet (108) ;
un passage de refroidissement (132) positionné à l'intérieur de la partie de base (126), adjacent à la surface interne (124) ; et
au moins un conduit d'échappement d'extrémité arrière (138) en communication fluidique avec le passage de refroidissement (132), l'au moins un conduit d'échappement d'extrémité arrière (138) s'étendant à travers l'extrémité arrière (104), radialement entre la partie de base (126) et la bride (130) ;
**caractérisée en ce que,**
l'au moins un conduit d'échappement d'extrémité arrière (138) est incliné radialement vers l'extérieur depuis le passage de refroidissement (132, 228), vers la bride (130, 226), de telle sorte qu'un fluide de refroidissement dans le passage de refroidissement (132) est évacué directement vers la bride (130) depuis le conduit d'échappement d'extrémité arrière (138).

2. Enveloppe de turbine (100) selon la revendication 1, comprenant en outre :
un premier côté (110) formé à proximité et s'étendant entre l'extrémité avant (102) et l'extrémité arrière (104) ; et
un second côté (112) positionné à l'opposé du second côté (112), le second côté (112) étant formé à proximité et s'étendant entre l'extrémité avant (102) et l'extrémité arrière (104).

3. Enveloppe de turbine (100) selon la revendication 2, dans laquelle la bride (130) s'étend depuis l'extrémité arrière (104) entre le premier côté (110) et le second côté (112).

4. Enveloppe de turbine (100) selon la revendication 1, dans laquelle la bride (130) s'étend angulairement depuis l'extrémité arrière (104) et s'étend l'un parmi :
radialement vers l'extérieur vers le second crochet (108), ou
radialement vers l'intérieur vers la partie de base (126).

5. Enveloppe de turbine (100) selon la revendication 1, dans laquelle la bride (130) s'étend axialement au-delà de la partie de base (126).

6. Enveloppe de turbine (100) selon la revendication 1, dans laquelle la bride (130) est positionnée radialement entre le passage de refroidissement (132) et le carter (36) de turbine (28).

7. Système de turbine (10) comprenant :
un carter (36) de turbine (28) ;
un premier étage positionné à l'intérieur du carter (36) de turbine (28), le premier étage comprenant :
une pluralité d'aubes (38) de turbine positionnées à l'intérieur du carter (36) de turbine (28) et
circonférentiellement autour d'un rotor (30) ;
une pluralité d'aubes de stator (40, 200) positionnées à l'intérieur du carter (36) de turbine (28), en aval de la pluralité d'aubes (38) de turbine ; et
une pluralité d'enveloppes de turbine (100) positionnées radialement adjacentes à la pluralité d'aubes (38) de turbine (28) et en amont de la pluralité d'aubes de stator (40, 200), chacune de la pluralité d'enveloppes de turbine (100) étant une enveloppe de turbine (100) selon l'une quelconque des revendications précédentes.

8. Système de turbine (10) selon la revendication 7, comprenant en outre :
un joint d'étanchéité (142) s'étendant entre chacune de la pluralité d'aubes de stator (40, 200) et la pluralité d'enveloppes de turbine (100), le joint d'étanchéité (142) étant en contact avec :
la partie de base (126) de chacune de la pluralité d'enveloppes de turbine (100), adjacente à l'extrémité arrière (104) ; et
une plate-forme externe (42) de chacune parmi la pluralité d'aubes de stator (40, 200).

9. Système de turbine (10) selon la revendication 8, dans lequel l'au moins un conduit d'échappement d'extrémité arrière (138) de chacune de la pluralité d'enveloppes de turbine (100) est positionné radialement entre la bride (130) et le joint d'étanchéité (142) étant en contact avec la partie de base (126).

10. Aube de stator (40, 200) positionnée à l'intérieur d'un carter (36) de turbine (28) d'un système de turbine (10), l'aube de stator (40, 200) comprenant :
une extrémité avant (210) ;
une extrémité arrière (212) positionnée à l'opposé de l'extrémité avant (210) ;
une partie de base (236) s'étendant entre l'extrémité avant (210) et l'extrémité arrière (212) et positionnée radialement à l'opposé du carter (36) de turbine (28), la partie de base (236) comportant une surface interne (222) faisant face à un chemin d'écoulement de gaz chaud pour le système de turbine (10) ;
une bride (226) s'étendant depuis l'extrémité arrière (212) et positionnée radialement entre la partie de base (236) et le carter (36) de turbine (28) ;
un passage de refroidissement (228) positionné adjacent à la partie de base (236) et à la surface interne (222) ; et
au moins un conduit d'échappement d'extrémité arrière (234) en communication fluidique avec le passage de refroidissement (228), l'au moins un conduit d'échappement d'extrémité arrière (234) s'étendant à travers l'extrémité arrière (212), radialement entre la partie de base (236) et la bride (226) ;
**caractérisée en ce que,** l'au moins un conduit d'échappement d'extrémité arrière (234) est incliné radialement vers l'extérieur depuis le passage de refroidissement (228), vers la bride (226), de telle sorte qu'un fluide de refroidissement dans le passage de refroidissement (228) est évacué directement vers la bride (226) depuis le conduit d'échappement d'extrémité arrière (234).

11. Aube de stator (40, 200) selon la revendication 10, comprenant en outre :
une plate-forme externe (42, 202) positionnée radialement adjacente au carter (36) de turbine (28), la plate-forme externe (42, 202) comportant au moins une partie de la partie de base (236).
